# EUROPEAN PATENT SPECIFICATION

(11) **EP 4 491 384 B1**
(45) Date of publication and mention of the grant of the patent: **18.11.2026**
(21) Application number: 24185473.6
(22) Date of filing: 28.06.2024
(51) Int. Cl.: B29D 12/02, B29C 45/00, G02C 5/00

(54) **COMPONENT OF SPECTACLES OR GOGGLE WITH INTEGRATED DECORATIVE ELEMENT AND SPECTACLES AND GOGGLE COMPRISING SUCH COMPONENT**
KOMPONENTE EINER BRILLE ODER BRILLE MIT INTEGRIERTEM DEKORATIVEM ELEMENT UND BRILLE UND BRILLE MIT SOLCH EINER KOMPONENTE
COMPOSANT DE LUNETTES OU DE LUNETTES AVEC ÉLÉMENT DÉCORATIF INTÉGRÉ ET LUNETTES ET LUNETTES COMPRENANT UN TEL COMPOSANT

(30) Priority: 30.06.2023 IT 202300013671
(43) Date of publication of application: 15.01.2025
(73) Proprietor: Luxottica S.r.l., 32021 Agordo (BL) (IT)
(72) Inventor: CASE, Loris, 32020 La Valle Agordina (BL) (IT)
(74) Representative: Biallo, Dario

(56) References cited:
- WO-A1-2005/002826
- WO-A1-2009/080444
- WO-A1-2017/145043
- WO-A2-2004/059367
- FR-A- 1 504 006
- FR-A- 1 569 916
- FR-A1- 2 141 617
- FR-A1- 2 899 981
- FR-E- 96 282
- US-A1- 2007 254 140
- US-A1- 2015 116 653
- US-A1- 2019 243 158

## Description

The present invention relates to a component of spectacles or goggle, spectacles comprising such a component, and a goggle comprising such a component. The present invention finds useful use in the field of eyewear.

Spectacle components, such as spectacle temples or fronts or nose pads, having a decorative element are known. In particular, spectacle temples on which a logo, inscription or design, such as a brand name of the manufacturer of the same spectacles and/or a decorative element, are known. In particular, it is known to make such temples by molding by carving into each temple a seat or a special recessed portion suitable for accommodating a plate or label on which the desired logo or trademark is depicted. It is known that such a plate or label is sized to be compatible with the size of the seat on the temple and is glued into it to embellish and decorate the temple. In particular, the plate is often undersized to allow it to fit easily into the seat. Disadvantageously, the plate, being glued, is subject to partial or total detachment over time.

Disadvantageously, the undersize of the plate relative to the seat gives rise, once the plate is glued into the seat, to the formation of an interspace between the plate and the seat, which is subject to the accumulation of dirt.

WO 2009/080444 A1 discloses the preamble of claim 1.

It is the purpose of the present invention to overcome the above-mentioned drawbacks, and in particular to conceive of a component of spectacles or goggle, spectacles comprising such a component, and a goggle comprising such a component, in which the detachment of the plate with the decorative element from the body of the temple is prevented.

Further purpose of the present invention is to provide a component of spectacles or goggle with a decorative element, spectacles comprising such a component and a goggle comprising such a component, which are less prone to dirt accumulation and are more durable.

Further purpose of the present invention is to make available a component of spectacles or goggle with a decorative element, spectacles comprising such a component and a goggle comprising such a component, which are aesthetically pleasing.

These and other purposes according to the present invention are achieved by making a component of spectacles or goggle as set forth in claim 1, and by spectacles or goggle comprising such a component as set forth in claim 8.

Additional features of the component of spectacles or goggle are the subject of the dependent claims.

The features and advantages of a component of spectacles or goggle, and of spectacles or goggle comprising such a component, according to the present invention will be most apparent from the following description, illustrative and not limiting, referring to the attached schematic drawings in which:
- figure 1 shows an exploded perspective view of a component of spectacles or goggle according to the known art, which is not an object of the present invention;
- figure 2 shows a perspective view of a component of spectacles or goggle according to the present invention;

- figure 3 shows a side view of a pair of spectacles comprising the component of figure 2;
- figure 4 shows a perspective view of the spectacles of figure 3;
- figure 5 shows a perspective view of a goggle comprising a component of spectacles or goggle according to the present invention.

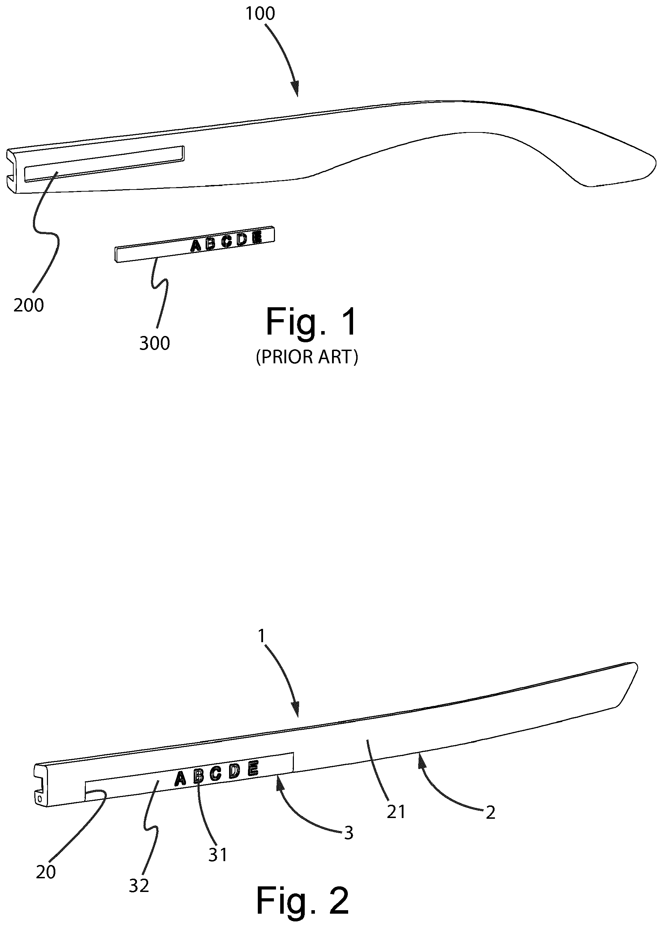

With reference to Figure 1, there is shown a known component 100 of spectacles or goggle, not an object of the present invention, comprising a seat 200 into which is glued a plate 300 bearing a logo or design or writing. With reference to Figure 2, a component of spectacles or goggle in accordance with the present invention, overall referred to as 1, is described below.

In accordance with the present invention, by way of example but not limitation, component 1 of spectacles or goggles is a temple. Alternatively, component 1 of spectacles or goggle may also be a front piece or part of a front piece, a nose pad, or generally any element of a spectacle frame or a frame of a goggle.

Component 1 comprises a body 2 of component of spectacle or goggle.

Component 1 also comprises a decorative element 3. According to the present invention, the decorative element 3 comprises a logo and/or a design and/or a writing.

Note that, in accordance with the present invention, decorative element 3 is made of at least one injection moldable material. Specifically, the decorative element 3 is injection molded onto the body 2.

In other words, the body 2 has a mold surface 21 on which the decorative element 3 is injection molded. Advantageously, decorative element 3 is intimately bonded to body 2.

Optionally, the mold surface 21 has a mechanical attachment element (not shown in the attached figures) designed to facilitate the attachment of the injected material onto the mold surface 21 to make the decorative element 3.

According to the invention, the body 2 has a seat 20 that is suitable for housing at least part of the decorative element 3.

The seat 20 is made on the mold surface 21.

In accordance with this embodiment, the decorative element is injection molded into said seat 20.

In other words, the decorative element 3 is obtained by injection molding the same directly inside the seat 20.

Seat 20 is configured as a cavity or recess formed on body 2, suitable for housing decorative element 3 within it.

In other words, seat 20 is conformed to be able to inject injection moldable material into it to make decorative element 3, which remains at least partially contained, once formed, in seat 20. Advantageously, decorative element 3 is integrated into body 2. In accordance with such an embodiment, the decorative element 3 may be completely contained in the seat 20 or remain partly protruding outside the seat 20, e.g., the first element 31 and/or part of the second element 32 may be protruding outside the seat 20.

Optionally, within such a cavity or recess may be the aforementioned attachment element.

In accordance with a second embodiment, which is an alternative to the first embodiment, the decorative element 3, when molded on the body 2, is completely protruding from the body 2.

In accordance with that second embodiment, the molding surface 21 of body 2 is continuous. In other words, there is no seat 20 suitable to accommodate at least part of the decorative element 3.

Preferably, the decorative element 3 comprises a first molded injection element 31 molded at a first moment and a second molded injection element 32 molded at a second moment. In particular, the first moment and the second moment are distinct from each other.

Preferably, the second element 32 at least partially surrounds the first element 31.

More preferably, the second element 32 perimeterally surrounds the first element 31.

For example, the first element 32 represents a profile or writing, as shown in Figure 2, and the second element 32 represents a surrounding background.

The first element 31 and the second element 32 are molded according to known methods.

In an embodiment, the second moment is subsequent to the first moment. In other words, the first element 31 is molded prior to the second element 32.

Alternatively, the second moment is prior to the first moment. In other words, the first element 31 is molded subsequent to the second element 32.

Preferably, the decorative element 3 completely fills the seat 20, if provided. Also preferably, the second element 32 fills the seat 20 from side to side, if provided.

Advantageously, there is no interspace between the seat 20 and the second element 32.

Preferably, the body 2 is obtained by molding.

Also preferably, body 2 is made of polymeric material. For example, body 2 is made of nylon.

According to one embodiment, body 2 and decorative element 3 are made of different materials.

For example, decorative element 3 is at least partly made of polymeric material. Preferably, the decorative element 3 is at least partly made of elastomeric material.

Also preferably, the second element 32 is made of elastomeric material.

According to one embodiment, the first element 31 and the second element 32 are made of the same material. Thus, the first element 31 can also be made of elastomeric material. In accordance with such an embodiment, the first element 31 is preferably molded prior to the second element 32.

In an alternative embodiment, the first element 31 and the second element 32 are made of different materials. In accordance with such an embodiment, the first element 31 is made of metal material. In accordance with such an embodiment, the first element is over-injected on the second element 32, i.e., molded subsequently. Preferably, the first element 31 and the second element 32 are in two or more different colors in order to form a logo and/or design and/or lettering.

The body 2 and the decorative element 3 may also be at least partially made of the same material. In particular, body 2 and first element 31 may be made in the same material. For example, both body 2 and the first element 31 are made of nylon.

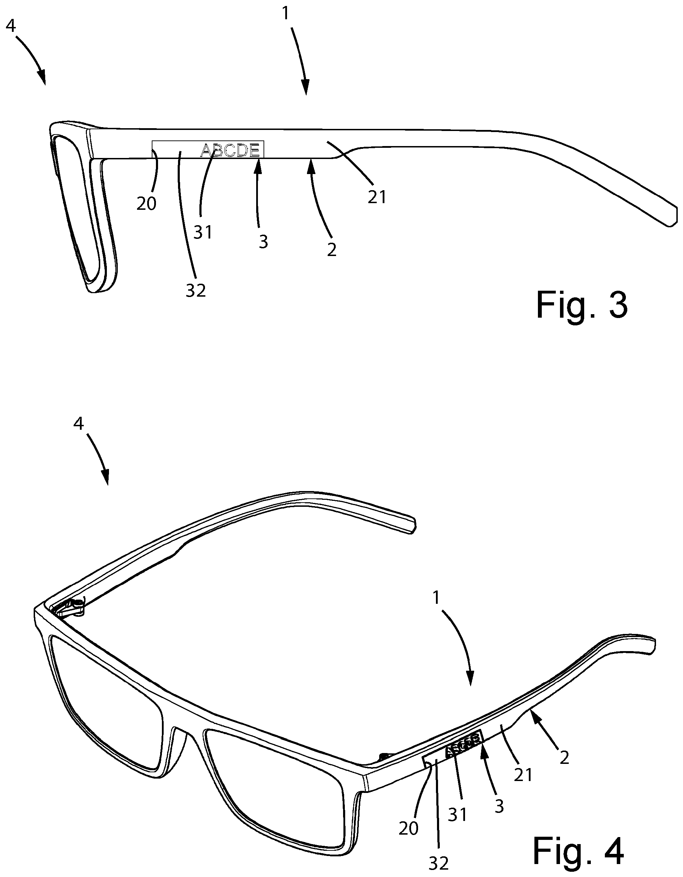

Also forming part of the present invention are spectacles 4, shown in Figures 3 and 4.

Note that the term spectacles means any type of pair of glasses, i.e., with two lenses, e.g., sunglasses, prescription, aesthetic, protective, sports, reading glasses.

Spectacles 4 comprise at least one component 1 of spectacles or goggle. Component 1 comprises a body 2 of component of spectacles or goggle and a decorative element 3 made of at least one injection moldable material, where decorative element 3 is injection molded onto body 2.

With particular reference to Figures 3 and 4, by way of example, component 1 is a temple.

Preferably, reference is made to the above for all features of component 1 in spectacles 4.

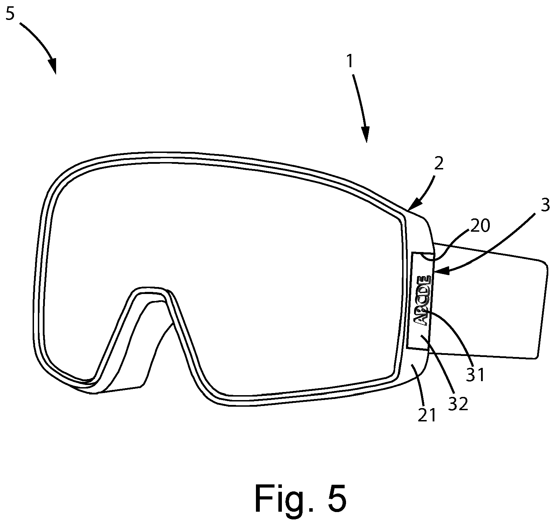

A goggle 5, shown in Figure 5, also forms part of the present invention.

Note that the term goggle means any type of goggles, i.e., with a single lens, such as a sports or protective goggle or other.

Goggle 5 comprises at least one component 1 of spectacles or goggles. The component 1 comprises a body 2 of component of spectacles or goggle and a decorative element 3 made of at least one injection moldable material, wherein the decorative element 3 is injection molded onto the body 2.

With particular reference to Figure 5, by way of example, component 1 is a side part of the front of the goggle 5. Preferably, reference is made to the above for all features of component 1 in goggle 5.

It is clear from the description made that the features of the component of spectacles or goggle and the spectacles and goggle that are the subject of the present invention are clear, as are the advantages thereof.

Finally, it is clear that the component of spectacles or goggle and the spectacles and goggle thus conceived are susceptible to numerous modifications and variations, all of which are within the scope of the appended claims.

In practice, the materials used, as well as the dimensions, may be any according to technical requirements.

## Claims

1. Component (1) of spectacles or goggle comprising:
- a body (2) of component of spectacles or goggle;
- a decorative element (3) made of at least one injection moldable material, said decorative element (3) being injection molded on said body (2); wherein said decorative element (3) comprises a first element (31) that is injection molded at a first time and a second element (32) that is injection molded at a second time;
**characterized in that** said body (2) has a seat (20) suitable for housing at least in part said decorative element (3), said decorative element being injection molded into said seat (20); the seat (20) being configured as a cavity or recess formed on body (2), suitable for housing decorative element (3) within it.

2. Component (1) according to the preceding claim, wherein said decorative element (3) completely fills said seat (20).

3. Component (1) according to any one of the preceding claims, wherein said decorative element (3) is at least partly made of polymeric material, preferably elastomeric material.

4. Component (1) according to any one of the preceding claims, wherein said body (2) and said decorative element (3) are made of different materials.

5. Component (1) according to any one of the preceding claims, wherein said first element (31) is made of metal material.

6. Component (1) according to any one of the preceding claims, wherein said first element (31) and said second element (32) are at least partly made of the same material.

7. Component (1) according to any one of the preceding claims, wherein said decorative element (3) comprises a logo and/or a drawing and/or a writing.

8. Spectacles (4) or goggle (5) comprising at least one component (1) of spectacles or goggle according to any one of the preceding claims.

## Patentansprüche

1. Komponente (1) einer Brille oder Schutzbrille, umfassend:
- einen Körper (2) einer Komponente der Brille oder Schutzbrille;
- ein dekoratives Element (3) aus mindestens einem spritzgießfähigen Material, wobei das dekorative Element (3) an den Körper (2) spritzgegossen ist; wobei das dekorative Element (3) ein erstes Element (31), das zu einem ersten Zeitpunkt spritzgegossen wird, und ein zweites Element (32), das zu einem zweiten Zeitpunkt spritzgegossen wird, umfasst;
**dadurch gekennzeichnet, dass** der Körper (2) einen Sitz (20) aufweist, der dazu geeignet ist, das dekorative Element (3) zumindest teilweise aufzunehmen, wobei das dekorative Element in den Sitz (20) spritzgegossen wird; wobei der Sitz (20) als ein am Körper (2) ausgebildeter Hohlraum oder eine Ausnehmung ausgelegt ist, der dazu geeignet ist, das dekorative Element (3) darin aufzunehmen.

2. Komponente (1) nach dem vorhergehenden Anspruch, wobei das dekorative Element (3) den Sitz (20) vollständig ausfüllt.

3. Komponente (1) nach einem der vorhergehenden Ansprüche, wobei das dekorative Element (3) zumindest teilweise aus polymerem Material, vorzugsweise elastomerem Material, hergestellt ist.

4. Komponente (1) nach einem der vorhergehenden Ansprüche, wobei der Körper (2) und das dekorative Element (3) aus unterschiedlichen Materialien hergestellt sind.

5. Komponente (1) nach einem der vorhergehenden Ansprüche, wobei das erste Element (31) aus Metallmaterial hergestellt ist.

6. Komponente (1) nach einem der vorhergehenden Ansprüche, wobei das erste Element (31) und das zweite Element (32) zumindest teilweise aus demselben Material hergestellt sind.

7. Komponente (1) nach einem der vorhergehenden Ansprüche, wobei das dekorative Element (3) ein Logo und/oder eine Zeichnung und/oder einen Schriftzug umfasst.

8. Brille (4) oder Schutzbrille (5), umfassend mindestens eine Komponente (1) einer Brille oder Schutzbrille nach einem der vorhergehenden Ansprüche.

## Revendications

1. Composant (1) de lunettes ou de masque comprenant:
- un corps (2) de composant de lunettes ou de masque;
- un élément décoratif (3) constitué d'au moins un matériau moulable par injection, ledit élément décoratif (3) étant moulé par injection sur ledit corps (2), ledit élément décoratif (3) comprenant un premier élément (31) qui est moulé par injection à un premier moment et un deuxième élément (32) qui est moulé par injection à un deuxième moment;
**caractérisé en ce que** ledit corps (2) comporte un siège (20) adapté pour accueillir au moins en partie ledit élément décoratif (3), ledit élément décoratif étant moulé par injection à l'intérieur dudit siège (20), le siège (20) étant conçu comme une cavité ou une encoche formée sur le corps (2), adaptée pour accueillir en son sein l'élément décoratif (3).

2. Composant (1) selon la revendication précédente, dans lequel ledit élément décoratif (3) remplit entièrement ledit siège (20).

3. Composant (1) selon l'une quelconque des revendications précédentes, dans lequel ledit élément décoratif (3) est au moins partiellement constitué d'un matériau polymère, de préférence d'un matériau élastomère.

4. Composant (1) selon l'une quelconque des revendications précédentes, dans lequel ledit corps (2) et ledit élément décoratif (3) sont constitués de matériaux différents.

5. Composant (1) selon l'une quelconque des revendications précédentes, dans lequel ledit premier élément (31) est constitué d'un matériau métallique.

6. Composant (1) selon l'une quelconque des revendications précédentes, dans lequel ledit premier élément (31) et ledit deuxième élément (32) sont au moins partiellement constitués du même matériau.

7. Composant (1) selon l'une quelconque des revendications précédentes, dans lequel ledit élément décoratif (3) comprend un logo et/ou un dessin et/ou une inscription.

8. Lunettes (4) ou masque (5) comprenant au moins un composant (1) de lunettes ou de masque selon l'une quelconque des revendications précédentes.
